# EUROPEAN PATENT SPECIFICATION

(11) **EP 4 266 444 B1**
(45) Date of publication and mention of the grant of the patent: **06.05.2026**
(21) Application number: 21907055.4
(22) Date of filing: 14.12.2021
(51) Int. Cl.: H01M 10/0562, C01B 25/14, H01B 1/06, C01D 15/00

(54) **SOLID ELECTROLYTE, METHOD FOR PREPARING SAME, AND ALL-SOLID-STATE BATTERY COMPRISING SAME**
FESTELEKTROLYT, VERFAHREN ZUR HERSTELLUNG DAVON UND FESTSTOFFBATTERIE DAMIT
ÉLECTROLYTE SOLIDE, SON PROCÉDÉ DE PRÉPARATION ET BATTERIE TOUT SOLIDE LE COMPRENANT

(30) Priority: 18.12.2020 KR 20200178622; 29.11.2021 KR 20210167376
(43) Date of publication of application: 25.10.2023
(73) Proprietor: RESEARCH INSTITUTE OF INDUSTRIAL SCIENCE & TECHNOLOGY, Pohang-si, Gyeongsangbuk-do 37673 (KR)
(72) Inventor: KWON, Ohmin, Incheon 22018 (KR); MOON, Ji Woong, Pohang-si, Gyeongsangbuk-do 37673 (KR); NAM, Sang Cheol, Seoul 02587 (KR); PARK, Yong Sun, Incheon 22792 (KR)
(74) Representative: Maiwald GmbH
(86) International application number: PCT/KR2021/018976
(87) International publication number: WO 2022/131751

(56) References cited:
- WO-A1-2019/009228
- JP-A- 2016 157 630
- KR-A- 20200 070 720
- KR-A- 20200 129 330
- KR-B1- 101 952 196

## Description

### Field of the Invention

Solid electrolyte, its manufacturing methods, and solid-state batteries containing it.

### Description of the Related Art

Recently, with the rapid spread of electronic devices using batteries such as IT mobile devices and small power-driven devices (e-bikes, small EVs, etc.), the demand for small, lightweight, and relatively high-capacity lithium secondary batteries is rapidly increasing. As the demand for lithium secondary batteries explodes, safety issues are emerging as a major issue. In order to improve safety and energy density among lithium secondary batteries, all-solid-state batteries are receiving a lot of attention. This all-solid-state battery is a battery in which all materials are solid, and refers to a battery that uses a particularly solid electrolyte. This all-solid-state battery has excellent safety with no risk of leakage of electrolyte solution, and has the merit of being easy to manufacture thin batteries. As the solid electrolyte, sulfide-based solid electrolytes with the composition as Li₆PS₅Cl with an argyrodite structure are mainly researched. However, these sulfide-based solid electrolytes are difficult to handle in a general atmosphere due to a reaction with moisture.

KR 101 952 196 B1 describes the preparation of a solid electrolyte by solid state reaction; a compound of formula Li6.13P0.8Si0.15S4.7O0.3Cl is mentioned.

### SUMMARY OF THE INVENTION

One embodiment is to provide a solid electrolyte that can improve water stability without deteriorating ion conductivity and battery performance.

Another embodiment is to provide a manufacturing method of the solid electrolyte.

Another embodiment is to provide an all-solid-state battery including the solid electrolyte.

One embodiment provides a solid electrolyte, comprising:
a sulfur compound represented by Chemical Formula 1 below and contains B in an amount of 10 ppm to 100,000 ppm.

   [Chemical Formula 1] Li₇₋ₓPS₆₋ₓCl_{1-y}Br_{y}
(In the Chemical Formula 1, 1 < x < 2, 0 ≤ y < 1)

The solid electrolyte is represented by Chemical Formula 2.

[Chemical Formula 2] Li₇₋ₓPS₆₋ₓB_{z}Cl_{1-y}Br_{y}O_{3/2z}

(In the Chemical Formula 2, 1 < x < 2, 0 ≤ y < 1, and 0 < z ≤ 0.5).

The B content is 1,000ppm to 100,000ppm.

The solid electrolyte is of the argyrodite type.

Another embodiment provides a manufacturing method for solid electrolyte, comprising:
preparing a mixture by mixing a compound containing lithium-containing sulfide, P and S-containing sulfide, Cl-containing compound and B-containing compound; producing a pellet by compressing the mixture; and heat treating the pellet, wherein, the B-containing compound is H₃BO₃, Li₃BO₃, BBr₃, BCl₃ or a combination thereof.

The mixing is carried out at a speed of 100 rpm to 2,000 rpm.

The compression is carried out under a pressure of 100MPa to 500MPa.

The heat treatment process is carried out at 400°C to 600°C.

Another embodiment provides an all-solid-state battery including a negative electrode positive electrode and the solid electrolyte positioned between the negative electrode and the positive electrode.

The solid electrolyte according to one embodiment can exhibit excellent output characteristic and cycle-life characteristic of the all-solid battery.

### DETAILED DESCRIPTION OF THE EMBODIMENTS

Hereinafter, embodiments of the present invention will be described in detail. However, this is presented as an example, and the present invention is not limited thereby, and the present invention is only defined by the scope of claims described later.

Unless otherwise stated in this specification, it will be understood that when an element such as a layer, film, region, or substrate is referred to as being "on" another element, it can be directly on the other element or intervening elements may also be present.

In addition, unless otherwise specified, % means wt%, and 1ppm is 0.0001 wt%.

The solid electrolyte according to one embodiment may include a compound represented by Chemical Formula 1 below.

[Chemical Formula 1] Li₇₋ₓPS₆₋ₓCl_{1-y}Br_{y}

(In the Chemical Formula 1, 1 < x < 2, 0 ≤ y < 1)

The solid electrolyte contains B, wherein the B content may be 10 ppm to 100,000 ppm, or 1,000 ppm to 100,000 ppm. When the B content is included in the range, it is possible to reduce the amount of H₂S gas generated during charging and discharging of the all-solid-state battery using the same, and to improve the cycle-life characteristic.

As such, the solid electrolyte containing B may be expressed by Chemical Formula 2 below.

[Chemical Formula 2] Li₇₋ₓPS₆₋ₓB_{z}Cl_{1-y}Br_{y}Oz_{3/2z}

(In the Chemical Formula 2, 1 < x < 2, 0 ≤ y < 1, and 0 < z ≤ 0.5)

As such, the solid electrolyte according to one embodiment is an argyrodite-type solid electrolyte, and as one containing B, moisture safety can be improved without deterioration of ion conductivity and battery performance according to B content. This is considered to be because B serves as a sintering material and oxygen supply material. If, instead of B, a metal oxide such as MgO or a halogen compound such as Br or F is included, even though moisture safety can be secured because Mg or halogen is not doped in the structure, ion conductivity and battery performance deteriorate.

In addition, even when Al, Ga, or In is included instead of B, it is not suitable for improving the moisture stability of the argyrodite structure because the bonding force between metal and oxygen is quite strong.

The effect of including B can be obtained when the B content described above is 10 ppm to 100,000 ppm, and even if B is included, if the B content is less than 10 ppm, the amount of H₂S gas generated increases, which is not appropriate, and if this exceeds 100,000 ppm, there may be a problem of deterioration of ion conductivity.

A typical argyrodite-type solid electrolyte has a structure in which the amount of Li increases as the amount of Cl decreases according to the composition formula of Li₇₋ₓPS₆₋ₓClₓ, but in one embodiment, as shown in Chemical Formula 2, Li₇₋ₓPS₆₋ₓB_{z}Cl_{1 -y}Br_{y}O_{z3/2z} blocks the connection between the halogen element and Li, and has the merit of reducing only the Li₂S fraction, thereby improving the moisture stability.

The solid electrolyte according to one embodiment can be manufactured in manufacturing method for solid electrolyte, comprising:
preparing a mixture by mixing a compound containing lithium-containing sulfide, P and S-containing sulfide, Cl-containing compound and B-containing compound; producing a pellet by compressing the mixture; and heat treating the pellet. The B-containing compound is H₃BO₃, Li₃BO₃, BBr₃, BCl₃ or a combination thereof. As a compound containing the B, when using this compound, even if it contains B, the effect of not generating moisture during the heat treatment process can be obtained compared to the case of using H₃BO₃.

The lithium-containing sulfide may be Li₂S, Li₂S₂ or combination thereof, but is not limited thereto. The P and S-containing compound may be P₂S₅, P₂O₅ or a combination thereof, but is not limited thereto.

The Cl compound may be LiCl, LiBr, LiI or a combination thereof, but is not limited thereto.

In the process of preparing the mixture, the content of the lithium-containing compound may be 10 mol% to 60 mol% with respect to the total 100 mol% of the mixture. If the content of the lithium-containing compound is included in the range, the connection between the halogen element and Li in the manufactured solid electrolyte can be blocked, and there can be merit in improving high ionic conductivity and moisture stability.

Compounds containing the B can be used from 10 ppm to 100,000 ppm weight with respect to the final solid electrolyte weight. When a compound containing B is used as the content, the amount of H₂S gas generated during charging and discharging can be reduced, and a solid electrolyte with excellent cycle-life characteristics can be manufactured. In addition, when a compound containing B is used in the amount, the B content in the final product may be 10 ppm to 100,000 ppm.

The content of the P and S-containing compound and the Cl-containing compound can be appropriately adjusted within the range in which the composition of the Chemical Formula 1 can be obtained.

The mixing process may be carried out as a mechanical process or as a chemical process.

When the mixing process is carried out as a mechanical process, it can be carried out as a milling process, and at this time, while giving mechanical energy such as ball mill, planetary mill, and mechano-fusion, non-polar organic solvents such as xylene, heptane, octane, and other can be used to perform a mechanical process of pulverization.

When the mixing process is carried out as a chemical process, it may be carried out as a chemical process using a polar organic solvent such as tetrahydrofuran (THF), ethanol, propanol, water or a combination thereof.

The mixing process can be carried out at a speed of 100 rpm to 2,000 rpm, and when carried out at this speed, high ion conductivity merit can be obtained due to uniform mixing.

In addition, the time for performing the mixing process can be appropriately adjusted according to the speed of the mixing process, and for example, it can be carried out for 1 hour to 50 hours, but is not limited thereto. In addition, the mixing process may further carry out a drying process, and at this time, the drying process should be carried out so that the solvent is substantially removed, and there is no need to limit the drying temperature and drying time.

In the step of producing pellets by compression, compression may be performed under a pressure of 100 MPa to 500 MPa. When the compression process is performed under the pressure, merit of high ionic conductivity due to uniform reaction can be obtained.

The heat treatment process can be carried out at 400°C to 600°C. When the heat treatment process is performed in the temperature range, merit of high ion conductivity due to uniform reaction can be obtained. Also, the heat treatment process may be performed in an inert atmosphere, and the inactive atmosphere may be an Ar atmosphere, an N₂ atmosphere, or a combination thereof.

Another embodiment provides an all-solid-state battery including the solid electrolyte and including a negative electrode and a positive electrode positioned across the solid electrolyte. That is, the all-solid-state battery includes a negative electrode, a positive electrode, and a solid electrolyte according to one embodiment in which the negative electrode and the positive electrode are positioned between the positive electrode and the positive electrode.

As the negative electrode, lithium metal or lithium alloy may be used, and a negative electrode composite containing a negative active material applied on the negative electrode current collector may be used. The negative electrode composite may further include a binder and a conductive material, if necessary.

The negative active material may be lithium metal, lithium alloy, lithium metal composite oxide, lithium-containing titanium composite oxide or a combination thereof.

The lithium alloy may be an alloy composed of lithium and at least one metal selected from Na, K, Rb, Cs, In, Fr, Be, Mg, Ca, Sr, Ba, Ra, Al and Sn. In addition, the lithium metal composite oxide may be any one metal (Me) oxide (MeOₓ) selected from the group consisting of lithium and Si, Sn, Zn, Mg, Cd, Ce, Ni and Fe. An example of the lithium metal complex oxide is LiₓFe₂O₃(0<x≤1), or LiₓWO₂ (0<x≤1).

In addition, as the negative active material, a metal complex oxide such as SnₓMe₁₋ₓMe'_{y}O_{z}(Me: Mn, Fe, Pb, Ge; Me': Al, B, P, Si, group 1, 2, and 3 elements of the periodic table, halogen 0<x ≤ 1; 1 ≤ y ≤ 3; 1 ≤ z ≤ 8) etc., a oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅ etc., can be used. Also, carbon-based materials such as crystalline carbon, amorphous carbon or carbon composites can be used alone or in combination of two or more.

In some cases, the negative electrode composite may contain a solid electrolyte according to an embodiment in an amount of 0.1 wt% to 60 wt%, specifically 10 wt% to 50 wt%, based on the entire weight of the negative electrode composite.

The binder is not particularly limited, and may include styrene butadiene rubber (SBR), polytetrafluoroethylene, polyvinylidene fluoride, polyethylene, etc., but is not limited thereto. The content of the binder is not particularly limited to the amount of drawing that can fix the negative active material, and may be 1 wt% to 10 wt% with respect to the entire weight of the negative electrode composite.

The conductive material is not particularly limited as long as it can improve the conductivity of the electrode, and examples thereof include nickel powder, cobalt oxide, titanium oxide, and carbon. In detail, the carbon may be one or more selected from the group consisting of ketjen black, acetylene black, furnace black, graphite, carbon fiber, and fullerene. The content of the conductive material may be selected in consideration of other battery conditions such as the type of conductive material, and may be 1 wt% to 10 wt% for the entire weight of the negative electrode composite.

The negative electrode current collector is not particularly limited as long as it does not cause chemical change in the all-solid-state battery and has conductivity. For example, copper; stainless steel; aluminum; nickel; titanium; sintered carbon; surface treatment with carbon, nickel, titanium, silver, etc. on copper or stainless steel; aluminum-cadmium alloy; etc. can be used. In addition, the negative electrode current collector can be used in various forms such as film having fine protrusions and depressions formed on the surface, sheet, foil, net, porous material, foam, and non-woven fabric.

The positive electrode includes a positive electrode composite containing a positive electrode current collector and a positive electrode active material positioned on the current collector. This positive electrode composite may further include a binder and a conductive material as needed.

The positive electrode active material may be a positive electrode active material capable of reversibly occluding and releasing lithium ions. For example as a positive electrode active material, LiₐA_{1-b}B¹_{b}D¹₂ (0.90 ≤ a ≤ 1.8, 0 ≤ b ≤ 0.5); LiₐE_{1-b}B¹_{b}O_{2-c}D¹_{c} (0.90 ≤ a ≤ 1.8, 0 ≤ b ≤ 0.5, 0 ≤ c ≤ 0.5); LiₐE_{2-b}B¹_{b}O_{4-c}D¹_{c} (0.90 ≤ a ≤ 1.8, 0 ≤ b ≤ 0.5, 0 ≤ c ≤ 05); LiₐNi_{1-b-c}Co_{b}B¹_{c}D¹_{α} (0.90 ≤ a ≤ 1.8, 0 ≤ b ≤ 0.5, 0 ≤ c ≤ 0.5, 0 < α ≤ 2); LiₐNi_{1-b-c}Co_{b}B¹_{c}O_{2-α}F¹_{α} (0.90 ≤ a ≤ 1.8, 0 ≤ b ≤ 0.5, 0 ≤ c ≤ 0.5, 0 < a < 2); LiₐNi_{1-b-c}Co_{b}B¹_{c}O_{2-α}F¹₂ (0.90 ≤ a ≤ 1.8, 0 ≤ b ≤ 0.5, 0 ≤ c ≤ 0.5, 0 < α < 2); LiₐNi_{1-b-c}Mn_{b}B¹_{c}D¹_{α} (0.90 ≤ a ≤ 1.8, 0 ≤ b ≤ 0.5, 0 ≤ c ≤ 0.5, 0 < α ≤ 2); LiₐNi_{1-b-c}Mn_{b}B¹_{c}O_{2-α}F¹_{α} (0.90 ≤ a ≤ 1.8, 0 ≤ b ≤ 0.5, 0 ≤ c ≤ 0.5, 0 < α < 2); LiₐNi_{1-b-c}Mn_{b}B¹_{c}O_{2-α}F¹₂ (0.90 ≤ a ≤ 1.8, 0 ≤ b ≤ 0.5, 0 ≤ c ≤0.5, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤1.8, 0.001 ≤ b ≤ 0.1); LiₐMnG_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); QO₂; QS₂; LiQS₂; V₂O₅; LiV₂O₅; LiI¹O₂; LiNiVO₄; Li _{(3-f)}J₂ PO₄₃ (0 ≤ f ≤ 2); Li _{(3-f)}Fe₂ PO₄₃ (0 ≤ f ≤ 2); or LiFePO₄ is provided.

In the Chemical Formula, A is Ni, Co, Mn, or a combination thereof; B¹ is Al, Ni, Co, Mn, Cr, Fe, Mg, Sr, V, a rare earth element or combination thereof; D¹ is O, F, S, P, or combination thereof and E is Co, Mn, or combination thereof; F¹ is F, S, P, or a combination thereof; G is Al, Cr, Mn, Fe, Mg, La, Ce, Sr, V, or a combination thereof; Q is Ti, Mo, Mn, or a combination thereof; I¹ is Cr, V, Fe, Sc, Y, or a combination thereof; J is V, Cr, Mn, Co, Ni, Cu, or a combination thereof.

The shape of the positive electrode active material is not particularly limited, and may be a particle type, for example a spherical shape, an oval shape, or a cuboid type. The average particle diameter of the positive electrode active material may be in the range of 1 to 50 µm, but is not limited thereto. The average particle diameter of the positive electrode active material can be obtained by, for example, measuring the particle diameter of the active material observed by a scanning electron microscope and calculating the average value thereof.

The binder is not particularly limited, and may include styrene butadiene rubber (SBR), polytetrafluoroethylene, polyvinylidene fluoride, polyethylene, etc., but is not limited thereto.

The content of the binder is not particularly limited as it can fix the positive electrode active material, and may be 1 wt% to 10 wt% based on the entire weight of the positive electrode composite.

The conductive material is not particularly limited as long as it can improve the conductivity of the positive electrode, and examples thereof include nickel powder, cobalt oxide, titanium oxide, and carbon. In detail, the carbon may be one or more selected from the group consisting of ketjen black, acetylene black, furnace black, graphite, carbon fiber, and fullerene.

The content of the conductive material may be selected in consideration of other battery conditions such as the type of conductive material, and may be 1 wt% to 10 wt% for the entire weight of the positive electrode composite, for example.

In order to increase the lithium ion conductivity in some cases, the positive electrode composite can include 0.1 wt% to 60 wt%, specifically 10 wt% to 50 wt% of the solid electrolyte according to one embodiment, based on the entire weight of the positive electrode composite.

The positive electrode current collector is not particularly limited as long as it does not cause chemical change in the all-solid-state battery and has conductivity. For example, stainless steel; aluminum; nickel; titanium; sintered carbon; surface treatment with carbon, nickel, titanium, silver, etc. on aluminium or stainless steel; etc. can be used. In addition, various forms such as film with fine protrusions and depressions formed on the surface, sheet, foil, net, porous material, foam, and non-woven fabric can be used.

### DETAILED DESCRIPTION OF THE EMBODIMENTS

An exemplary embodiment and a Comparative Example will be described below. Such an exemplary embodiment described below is only an exemplary embodiment, and the present invention is not limited to the exemplary embodiment described below.

### (Comparative Example 1)

A mixture was prepared by mixing Li₂S, P₂S₅ and LiCl at 300 rpm for 8 hours using a planetary mill. At this time, 0.017 mol of the Li₂S content was used, and 0.0039 mol and 0.0078 mol of P₂S₅ and LiCl were used, respectively.

A pellet was prepared by compressing the mixture at 300 MPa pressure, and the pellet was heat treated at 550 °C for 8 hours under an Ar atmosphere to prepare an argyrodite type Li_{5.5}PS_{4.75}Cl solid electrolyte.

### (exemplary embodiment 1)

A mixture was prepared by mixing Li₂S, P₂S₅, LiCl and B₂O₃ at 300 rpm for 8 hours using a planetary mill. At this time, 0.017 mol of the Li₂S content was used, and 0.0039 mol and 0.0078 mol of P₂S₅ and LiCl were used, respectively. In addition, B₂O₃ was used to be 0.027 g, that is, 13,000 ppm with respect to 2 g of the final solid electrolyte.

Pellets were prepared by compressing the mixture at 300 MPa pressure, and the pellets were subjected to heat treatment at 550 °C for 8 hours in an Ar atmosphere to prepare an argyrodite type Li_{5.5}PS_{4.75}Cl solid electrolyte containing 13,000 ppm B. The composition of the prepared solid electrolyte was Li_{5.5}PS_{4.75}B_{0.05}ClO_{0.075}.

Using the solid electrolyte, an all-solid-state battery was manufactured in the same manner as in the Comparative Example 1.

### (exemplary embodiment 2)

An argyrodite type Li_{5.5}PS_{4.75}Cl solid electrolyte containing 26,000 ppm B was prepared in the same manner as in the exemplary embodiment 1, except that 26,000 ppm B₂O₃ was used. The composition of the prepared solid electrolyte was Li_{5.5}PS_{4.75}B_{0.1}ClO_{0.15}.

Using the solid electrolyte, an all-solid-state battery was manufactured in the same manner as in the Comparative Example 1.

### (exemplary embodiment 3)

An argyrodite type Li_{5.5}PS_{4.75}Cl solid electrolyte containing 39,000 ppm B was prepared in the same manner as in the exemplary embodiment 1 except that 39,000 ppm of B₂O₃ was used. The composition of the prepared solid electrolyte was Li_{5.5}PS_{4.75}B_{0.15}ClO_{0.225}.

Using the solid electrolyte, an all-solid-state battery was manufactured in the same manner as in the Comparative Example 1.

### (exemplary embodiment 4)

An argyrodite type Li_{5.5}PS_{4.75}Cl solid electrolyte containing 52,000 ppm of B was prepared in the same manner as in the exemplary embodiment 1, except that 52,000 ppm of B₂O₃ was used. The composition of the prepared solid electrolyte was Li_{5.5}PS_{4.75}B_{0.2}ClO_{0.3}.

Using the solid electrolyte, an all-solid-state battery was manufactured in the same manner as in the Comparative Example 1.

### (exemplary embodiment 5)

An argyrodite type Li_{5.5}PS_{4.75}Cl solid electrolyte containing 2,000 ppm B was prepared in the same manner as in the exemplary embodiment 1, except that 65,000 ppm of B₂O₃ was used. The composition of the prepared solid electrolyte was Li_{5.5}PS_{4.75}B_{0.25}ClO_{0.375}.

Using the solid electrolyte, an all-solid-state battery was manufactured in the same manner as in the Comparative Example 1.

### (exemplary embodiment 6)

An argyrodite type Li_{5.5}PS_{4.75}Cl solid electrolyte containing 6,500 ppm B was prepared in the same manner as in the exemplary embodiment 1, except that 6,500 ppm of B₂O₃ was used. The composition of the prepared solid electrolyte was Li_{5.5}PS_{4.75}B_{0.025}ClO_{0.0375}.

Using the solid electrolyte, an all-solid-state battery was manufactured in the same manner as in the Comparative Example 1.

### (exemplary embodiment 7)

An argyrodite-type Li_{5.5}PS_{4.75}Cl solid electrolyte containing 20 ppm B was prepared in the same manner as in the exemplary embodiment 1, except that 20 ppm B₂O₃ was used.

Using the solid electrolyte, an all-solid-state battery was manufactured in the same manner as in the Comparative Example 1.

### (exemplary embodiment 8)

An argyrodite-type Li_{5.5}PS_{4.75}Cl solid electrolyte containing 100,000 ppm B was prepared in the same manner as in the exemplary embodiment 1, except that 100,000 ppm B₂O₃ was used.

Using the solid electrolyte, an all-solid-state battery was manufactured in the same manner as in the Comparative Example 1.

### (exemplary embodiment 9)

An argyrodite type Li_{5.5}PS_{4.75}Cl solid electrolyte containing 500 ppm B was prepared in the same manner as in the exemplary embodiment 1, except that 500 ppm B₂O₃ was used.

Using the solid electrolyte, an all-solid-state battery was manufactured in the same manner as in the Comparative Example 1.

### (exemplary embodiment 10)

An argyrodite type Li_{5.5}PS_{4.75}Cl solid electrolyte containing 1,000 ppm B was prepared in the same manner as in the exemplary embodiment 1, except that 1,000 ppm B₂O₃ was used.

Using the solid electrolyte, an all-solid-state battery was manufactured in the same manner as in the Comparative Example 1.

### (Comparative Example 2)

An argyrodite type Li_{5.5}PS_{4.75}Cl solid electrolyte containing 200,000 ppm B was prepared in the same manner as in the exemplary embodiment 1, except that 200,000 ppm B₂O₃ was used.

Using the solid electrolyte, an all-solid-state battery was manufactured in the same manner as in the Comparative Example 1.

### (Experimental Example 1) Measurement of capacity, efficiency and cycle number characteristics

The solid electrolytes of the exemplary embodiments 1 to 10 and the Comparative Examples 1 and 2 were added to heptane or xylene, and/or butyl butyrate to prepare a solid electrolyte slurry, and the slurry was cast on a release polytetrafluoroethylene film and after drying at room temperature, a solid electrolyte membrane having a thickness of 5 µm was prepared.

A positive electrode active material slurry was prepared by mixing LiNi_{0.8}Co_{0.1}Mn_{0.1}O₂ positive electrode active material, the solid electrolyte of the exemplary embodiments 1 to 10 and the Comparative Example 1 and 2 and Denka black conductive material in N-methylpyrrolidone solvent at 70:29:1 weight ratio. The positive electrode active material slurry was loaded on an aluminum foil having an area of 0.785 cm² with a loading amount of 20 mg, and compressed at 300 MPa to prepare a positive electrode.

After positioning the positive electrode, the solid electrolyte membrane and lithium metal counter electrode, they were bonded at 50 MPa to prepare an all-solid-state battery.

After aging the manufactured all-solid-state battery at room temperature 25°C for 2 hours, 0.1C charging and discharging performed once under a condition of CC (constant current)/CV (constant voltage) 1.9V to 3.60V, and 1/20C cut-off. And then the charge capacity and discharge capacity were measured. The results are shown in Table 1 below. At this time, the reference capacity was set to 180 mAh/g.

In addition, the discharge capacity ratio to the charge capacity was obtained, and the result is shown in Table 1 as one-time efficiency.

In addition, for the all-solid-state battery manufactured according to the exemplary embodiments 1 to 10 and the Comparative Examples 1 and 2, charging and discharging 30 times at 0.3C was performed under the condition of CC (constant current)/CV (constant voltage) 1.9V to 3.60V, 1/20C cut-off, and the ratio of 30 discharge capacity to one-time discharge capacity was obtained. The result is shown as a cycle-life characteristic in Table 1 below.

### (Experimental Example 2) Measurement of H₂S generation

The solid electrolytes prepared according to the exemplary embodiments 1 to 10 and the Comparative Examples 1 and 2 were each positioned in a chamber (chamber).

Dry air is passed through water to form a gas containing a certain amount of moisture, and this gas is purged into the chamber where the solid electrolyte is positioned for 5 minutes. The chamber was closed, and an amount of H₂S gas was measured with a meter of H₂S gas for 1 hour

The results are shown in Table 1 below.

**(Table 1)**

| | B content in solid electrolyte (ppm) | Amount of 0.1C charge (mAh/g) | Amount of 0.1C discharge (mAh/g) | 1-time efficiency (%) | cycle-life characteristic (%) | H₂S generation amount (cm³/g) |
|---|---|---|---|---|---|---|
| Comparative Example 1 | 0 | 215.1 | 175.5 | 81.6 | 78.5 | 0.200 |
| exemplary embodiment 7 | 20 | 215.6 | 175.5 | 81.4 | 79.0 | 0.200 |
| exemplary embodiment 9 | 500 | 215.3 | 175.5 | 81.5 | 78.6 | 0.197 |
| exemplary embodiment 10 | 1,000 | 215.1 | 174.9 | 81.3 | 78.7 | 0.196 |
| exemplary embodiment 1 | 13,000 | 216.5 | 175.2 | 80.9 | 78.9 | 0.190 |
| exemplary embodiment 8 | 100,000 | 190.5 | 155.1 | 81.4 | 90.5 | 0.001 |
| Comparative Example 2 | 200,000 | 170.1 | 131.2 | 77.1 | 81.6 | 0.001 |

As shown in the Table 1, compared to Comparative Example 1 using a solid electrolyte that does not contain B, the all-solid-state batteries of exemplary embodiments 1 to 10 using a solid electrolyte containing 10 ppm to 100,000 ppm B have excellent charge and discharge capacities. In addition, it can be seen that it exhibits excellent cycle-life characteristics while maintaining excellent efficiency and capacity. In addition, it can be seen that the amount of H₂S gas in the solid electrolytes of Examples 1 to 10 was lower than that of Comparative Example 1.

In addition, even if a solid electrolyte containing B is used, when the B content is excessively high, such as 200,000 ppm, it can be seen that the charge and discharge capacity, efficiency and cycle-life characteristics are all deteriorated.

Although the preferred exemplary embodiment of the present invention has been described above, the present invention is not limited thereto, and it is possible to perform various modifications within the scope of the claims range and the detailed description and accompanying drawing of the invention, and this also It goes without saying that it belongs to the range of the present invention.

## Claims

1. A solid electrolyte, comprising:
a sulfur compound represented by Chemical Formula 1 below and contains B in an amount of 10 ppm to 100,000 ppm.
[Chemical Formula 1] Li₇₋ₓPS₆₋ₓCl_{1-y}Br_{y}
(In the Chemical Formula 1, 1 < x < 2, 0 ≤ y < 1)

2. The solid electrolyte of claim 1, wherein:
the solid electrolyte is represented by Chemical Formula 2.
[Chemical Formula 2] Li₇₋ₓPS₆₋ₓB_{z}Cl_{1-y}Br_{y}O_{3/2z}
(In the Chemical Formula 2, 1 < x < 2, 0 ≤ y < 1, and 0 < z ≤ 0.5)

3. The solid electrolyte of claim 1, wherein:
the B content is 1,000ppm to 100,000ppm.

4. The solid electrolyte of claim 1, wherein:
the solid electrolyte is of the argyrodite type.

5. A manufacturing method for a solid electrolyte according to claim 1, comprising:
preparing a mixture by mixing a compound containing lithium-containing sulfide, P and S-containing sulfide, Cl-containing compound and B-containing compound;
producing a pellet by compressing the mixture; and
heat treating the pellet,
wherein, the B-containing compound is H₃BO₃, Li₃BO₃, BBr₃, BCl₃ or a combination thereof.

6. The method of claim 5, wherein:
the mixing is carried out at a speed of 100 rpm to 2,000 rpm.

7. The method of claim 5, wherein:
the compression is carried out under a pressure of 100MPa to 500MPa.

8. The method of claim 5, wherein:
the heat treatment process is carried out at 400°C to 600°C.

9. An all solid-state battery comprising:
a negative electrode;
a positive electrode; and
a solid electrolyte of any one of claim 1 to claim 4, positioned between the negative electrode and the positive electrode.

## Patentansprüche

1. Ein Festelektrolyt, umfassend:
eine Schwefelverbindung, die durch die nachstehende chemische Formel 1 dargestellt wird und B in einer Menge von 10 ppm bis 100.000 ppm enthält.
[Chemische Formel 1] Li₇₋ₓPS₆₋ₓCl_{1-y}Br_{y}
(In der chemischen Formel 1 ist 1 < x < 2, 0 ≤ y < 1)

2. Der Festelektrolyt gemäß Anspruch 1, wobei:
der Festelektrolyt durch die chemische Formel 2 dargestellt wird.
[Chemische Formel 2] Li₇₋ₓPS₆₋ₓB_{z}Cl_{1-y}Br_{y}O_{3/2z}
(In der chemischen Formel 2 ist 1 < x < 2, 0 ≤ y < 1 und 0 < z ≤ 0,5)

3. Der Festelektrolyt gemäß Anspruch 1, wobei:
der B-Gehalt 1.000 ppm bis 100.000 ppm beträgt.

4. Der Festelektrolyt gemäß Anspruch 1, wobei:
der Festelektrolyt vom Argyrodit-Typ ist.

5. Ein Verfahren zur Herstellung eines Festelektrolyten nach Anspruch 1, umfassend:
Herstellen einer Mischung durch Mischen einer Verbindung, die lithiumhaltiges Sulfid, P- und S-haltiges Sulfid, Cl-haltige Verbindung und B-haltige Verbindung enthält;
Herstellen eines Pellets durch Komprimieren der Mischung; und
Wärmebehandlung des Pellets,
wobei die B-haltige Verbindung H₃BO₃, Li₃BO₃, BBr₃, BCl₃ oder eine Kombination davon ist.

6. Das Verfahren gemäß Anspruch 5, wobei
das Mischen mit einer Geschwindigkeit von 100 U/min bis 2000 U/min durchgeführt wird.

7. Das Verfahren gemäß Anspruch 5, wobei
das Komprimieren unter einem Druck von 100 MPa bis 500 MPa durchgeführt wird.

8. Das Verfahren gemäß Anspruch 5, wobei
der Wärmebehandlungsprozess bei 400 °C bis 600 °C durchgeführt wird.

9. Eine Festkörperbatterie, umfassend:
eine negative Elektrode;
eine positive Elektrode; und
einen Festelektrolyten nach einem der Ansprüche 1 bis 4, der zwischen der negativen Elektrode und der positiven Elektrode angeordnet ist.

## Revendications

1. Électrolyte solide, comprenant :
un composé soufré représenté par la formule chimique 1 ci-dessous et contenant B en une quantité de 10 ppm à 100 000 ppm.
[Formule chimique 1] Li₇₋ₓPS₆₋ₓCl_{1-y}Br_{y}
(Dans la formule chimique 1, 1 < x < 2, 0 ≤ y < 1)

2. Électrolyte solide selon la revendication 1, dans lequel :
l'électrolyte solide est représenté par la formule chimique 2.
[Formule chimique 2] Li₇₋ₓPS₆₋ₓB_{z}Cl_{1-y}Br_{y}O_{3/2z}
(Dans la formule chimique 2, 1 < x < 2, 0 ≤ y < 1 et 0 < z ≤ 0,5)

3. Électrolyte solide selon la revendication 1, dans lequel :
la teneur en B est de 1000 ppm à 100 000 ppm.

4. Électrolyte solide selon la revendication 1, dans lequel :
l'électrolyte solide est du type argyrodite.

5. Procédé de préparation d'un électrolyte solide selon la revendication 1, comprenant :
la préparation d'un mélange en mélangeant un composé contenant un sulfure contenant du lithium, un sulfure contenant P et S, un composé contenant Cl et un composé contenant B ;
la production d'une pastille par compression du mélange ; et
le traitement thermique de la pastille,
dans lequel, le composé contenant B est H₃BO₃, Li₃BO₃, BBr₃, BCl₃ ou une combinaison de ceux-ci.

6. Procédé selon la revendication 5, dans lequel :
le mélange est réalisé à une vitesse de 100 tr/min à 2000 tr/min.

7. Procédé selon la revendication 5, dans lequel :
la compression est réalisée sous une pression de 100 MPa à 500 MPa.

8. Procédé selon la revendication 5, dans lequel :
le procédé de traitement thermique est réalisé entre 400 °C et 600 °C.

9. Batterie tout solide comprenant :
une électrode négative ;
une électrode positive ; et
un électrolyte solide selon l'une des revendications 1 à 4, positionné entre l'électrode négative et l'électrode positive.
